# EUROPEAN PATENT APPLICATION

(11) **EP 3 767 029 A1**
(43) Date of publication of application: **20.01.2021**
(21) Application number: 18909275.2
(22) Date of filing: 28.11.2018
(51) Int. Cl.: D21H 21/02

(54) **PITCH TROUBLE PREVENTION METHOD**

(30) Priority: 14.03.2018 JP 2018046987
(71) Applicant: Kurita Water Industries Ltd., Tokyo 164-0001 (JP)
(72) Inventor: KATSURA, Hiroki, Tokyo 164-0001 (JP); WADA, Satoshi, Tokyo 164-0001 (JP); OZAWA, Yoshihiro, Tokyo 164-0001 (JP)
(74) Representative: TBK
(86) International application number: PCT/JP2018/043792
(87) International publication number: WO 2019/176182

(57) **Abstract**

There is provided an efficient pitch trouble prevention method in a papermaking step of paper production. The pitch trouble prevention method in a papermaking step of paper production includes: an aeration step of exposing at least one of white water and adjusted water to gas; and a pitch control agent addition step of adding a pitch control agent to at least one of the white water and the adjusted water.

## Description

### Technical Field

The present invention relates to paper production, and more particularly to a pitch trouble prevention method in a papermaking step of paper production.

### Background Art

Currently, paper production is performed through a papermaking step of making paper from raw material slurry of pulp raw material dispersed in water. In the papermaking step, a large amount of white water containing fine fiber and filler is discharged from a paper machine or the like. The discharged white water is circulated in the papermaking step considering effective use and recycling of water resources.

However, since the white water contains pitch-generating substances such as starch, sizing agent, latex, casein, or the like, circulating the white water tends to cause coagulation and coarsening of the pitch-generating substances. Also, the pitch-generating substances tend to be deposited on a bottom of a tank storing the white water, which may also cause coagulation and coarsening of the pitch-generating substances in a deposit. When pitch generated by coarsening of the pitch-generating substances is mixed into a product, the pitch causes trouble (pitch trouble) such as reductions in product quality and production efficiency.

Then, as a measure against the pitch trouble, in a white water circulation system for circulating white water, part of the white water is disposed of and new water is introduced to avoid concentration of pitch-generating substances, which does not solve the problem alone.

As a further measure against the pitch trouble, a method of adding a pitch control agent to a white water circulation system has been proposed (for example, see PTL 1). The pitch control agent is effective for pitch suspended in water and useful for reducing the pitch.

However, it has been found that the pitch control agent is not very effective for pitch in a deposit on a bottom of a tank, and cannot exert a sufficient effect on coarsened pitch. Then, to reduce such kinds of pitch, a large amount of pitch control agents needs to be added. However, the pitch control agent is relatively expensive, and a reduction in usage of the pitch control agent is desired to reduce economic burden.

### Citation List

### Patent Literature

PTL1: JP 2014-141774 A

### Summary of Invention

### Technical Problem

The present invention is achieved in view of such circumstances, and has an object to provide an efficient pitch trouble prevention method in a papermaking step of paper production.

### Solution to Problem

To achieve the object, the present inventors have diligently studied and found that at least one of a white water circulation system and an adjusted water system is exposed to gas, and a pitch control agent is added to at least one of the white water circulation system and the adjusted water system, thereby efficiently suppressing coagulation of pitch to prevent pitch trouble.

Specifically, the present invention provides [1] to [4] described below.
[1] A pitch trouble prevention method in a papermaking step of paper production including: an aeration step of exposing at least one of a white water circulation system and an adjusted water system to gas; and a pitch control agent addition step of adding a pitch control agent to at least one of the white water circulation system and the adjusted water system.
[2] The pitch trouble prevention method of [1], wherein the pitch control agent addition step is performed after the aeration step.
[3] The pitch trouble prevention method of [1] or [2], wherein in the pitch control agent addition step, an amount of the pitch control agent to be added is 0.1 mg/L to 10,000 mg/L per kg of suspended solids.
[4] The pitch trouble prevention method of any of [1] to [3], wherein in the aeration step, an aeration tank having a diffuser at a bottom is used, and an amount of aeration by the diffuser is 0.5 m³/h to 10 m³/h per m² of bottom area of the aeration tank.
[5] The pitch trouble prevention method of any of [1] to [4], wherein in the aeration step, both the white water and the adjusted water are exposed to gas.
[6] The pitch trouble prevention method of any of [1] to [5], wherein a time from the aeration to the addition of the pitch control agent is 0 to 30 minutes.

### Advantageous Effects of Invention

According to the present invention, an efficient pitch trouble prevention method in a papermaking step of paper production can be provided.

### Brief Description of Drawing

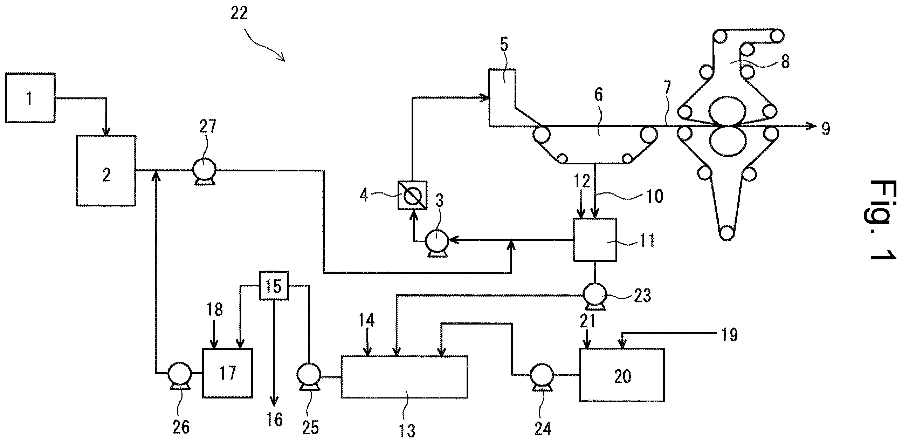

[Fig. 1] Fig. 1 shows one aspect of a papermaking step according to an embodiment of the present invention.

### Description of Embodiment

A pitch trouble prevention method in a papermaking step of paper production according to an embodiment of the present invention includes: an aeration step of exposing at least one of white water and adjusted water to gas; and a pitch control agent addition step of adding a pitch control agent to at least one of the white water and the adjusted water.

### [Papermaking step]

A papermaking step of paper production will be described. Fig. 1 shows one aspect of a papermaking step according to an embodiment of the present invention.

In the papermaking step, raw material pulp slurry produced in a raw material production step 1 and stored in a machine tank 2 is fed by pumps 3, 27 through a screen 4 to an inlet 5. The raw material pulp slurry fed to the inlet 5 is supplied to a wire part 6 and dehydrated. A dehydrated wet sheet 7 is fed through a press part 8 to a dryer part 9.

A liquid separated by the wire part 6 is white water 10. The white water 10 usually contains fine fiber from raw material pulp used in papermaking, or other chemical agents for paper production.

The white water 10 separated by the wire part 6 is stored in a white water silo 11. The white water stored in the white water silo 11 may be exposed to air (gas), or a pitch control agent 12 may be add thereto. The white water stored in the white water silo 11 is supplied to the raw material pulp slurry as long as the concentration or the like of the white water satisfies the condition of papermaking. The white water stored in the white water silo 11 and which does not satisfy the condition of papermaking is fed by a pump 23 to an aeration tank 13 and stored. The white water stored in the aeration tank 13 may be exposed to air (gas), or a pitch control agent 14 may be add thereto. The white water from the aeration tank 13 is fed by a pump 25 to a solid-liquid separator 15. Part of the white water fed to the solid-liquid separator 15 is fed to an aeration tank 17 and stored. From the rest of the white water fed to the solid-liquid separator 15, solids are discharged or collected by a raw material system (16).

The white water stored in the aeration tank 17 may be exposed to air (gas), or a pitch control agent 18 may be add thereto. The white water from the aeration tank 17 is supplied downstream of the machine tank 2 by a pump 26, and mixed with the raw material pulp slurry. The raw material pulp slurry mixed with the white water is fed by the pumps 3, 27 through the screen 4 to the inlet 5 as described above.

A system for circulating the white water described so far is a white water circulation system 22.

In the white water circulation system 22, aeration processing of the white water or pitch control agent addition processing to the white water is preferably performed in at least one of the white water silo 11 and the aeration tanks 13, 17 storing the white water (dilution water), and any number of the white water silo 11 and the aeration tanks 13, 17 may be provided. In the white water circulation system 22, the aeration processing of the white water or the pitch control agent addition processing to the white water is more preferably performed in the white water silo 11 considering that the pitch control agent can be sufficiently mixed with the raw material pulp slurry.

In the white water circulation system 22, the aeration processing of the white water or the pitch control agent addition processing to the white water may be performed in the machine tank 2 or the like storing the raw material pulp slurry, and is more preferably performed in the machine tank 2 or the like storing the raw material pulp slurry in addition to being performed at the places where the white water (dilution water) is stored. Raw material dilution water containing the white water is exposed to air (gas) or the pitch control agent is added thereto, thereby enhancing an effect of the pitch control agent on the entire white water circulated in the white water circulation system 22.

In the white water circulation system 22, adjusted water may be supplied from an adjusted water system 19 to adjust the concentration of the circulated white water. The adjusted water may include, but not limited to, for example, soft water and hard water for paper production.

The adjusted water from the adjusted water system 19 may be exposed to air (gas) in an aeration tank 20, or a pitch control agent 21 may be added thereto. The adjusted water from the aeration tank 20 is fed by a pump 24 to the aeration tank 13 to adjust the concentration of the white water.

The white water and the adjusted water may each contain a small amount of chemical agent for paper production without reducing the effect of the present invention.

Examples of the chemical agent for paper production may include, but not limited to surfactant, wax, sizing agent, filler, anti-corrosive agent, conductive agent, anti-foaming agent, slime control agent, dispersant, viscosity modifier, flocculant, coagulant, paper strengthening agent, retention aid, paper powder falling preventing agent, and bulking agent.

Examples of the raw material pulp used for papermaking may include, but not limited to chemical pulp, mechanical pulp, and waste paper pulp.

Examples of the chemical pulp may include leaf bleached kraft pulp (LBKP), needle bleached kraft pulp (NBKP), leaf unbleached kraft pulp (LUKP), and needle unbleached kraft pulp (NUKP).

Examples of the mechanical pulp may include ground pulp (GP), thermomechanical pulp (TMP), chemithermomechanical pulp (CTMP), and refiner mechanical pulp (RMP).

Examples of the waste paper pulp may include waste corrugated board pulp, waste liner pulp, waste magazine pulp, waste newspaper pulp, waste land certificate pulp, waste high grade white paper pulp, and deinked waste paper pulp.

### [Aeration step]

In an aeration step, at least one of the white water and the adjusted water is exposed to gas. The aeration refers to supplying gas to the white water and the adjusted water.

In the aeration step, both the white water and the adjusted water are preferably exposed to gas considering that the gas can be sufficiently supplied to the white water and the adjusted water and that pitch coagulation in the entire white water circulation system can be easily suppressed to prevent pitch trouble.

In the aeration step, the white water after separated by the wire part 6 and before mixed with the raw material pulp slurry is preferably exposed to gas considering that pitch coagulation in the white water circulation system can be easily suppressed to prevent pitch trouble.

Examples of the gas used for aeration may include, but not limited to, a mixed gas and a high purity gas. The gas used for aeration is preferably a mixed gas, more preferably an oxygen-containing gas, and further preferably air considering its availability. The oxygen-containing gas contains, besides oxygen, nitrogen, carbon dioxide, and the like. The oxygen-containing gas may be used alone, or two or more kinds of oxygen-containing gases may be used in combination.

An aeration method may be any method that can supply gas to at least one of the white water and the adjusted water. The aeration method may use, for example, a diffuser and agitation. In particular, a method using a diffuser such as a diffuser pipe and a diffuser plate is preferable considering stable and continuous aeration. As a specific method using a diffuser, a diffuser can be provided at a bottom of a tank to blow microbubbles upward from the bottom, thereby increasing contact efficiency of target water and gas to perform efficient aeration.

The diffuser may have, but not limited to, for example, an opening with a diameter of 1 mm to 5 mm at a predetermined interval of 5 cm to 50 cm. One or more diffusers may be provided.

In the white water circulation system and the adjusted water system, aeration may be performed in any position such as in an aeration tank, a pipe, or a channel. The aeration is preferably performed in the aeration tank considering more efficient aeration in a large scale. The aeration tank preferably has a diffuser at a bottom. The aeration tank may have any shape such as a box shape, a circular shape, an elliptical shape, or a bowl shape. One or more aeration tanks may be provided in the white water circulation system and the adjusted water system.

In the aeration step, it is preferable that the aeration tank having a diffuser at a bottom is used, and an amount of aeration by the diffuser is preferably 0.5 m³/h to 10 m³/h per m² of bottom area of the aeration tank. The amount of aeration within the above range allows the gas to be sufficiently supplied to the white water and adjusted water. Considering the above and a reduction in production cost, the amount of aeration is more preferably 1.0 m³/h to 9.0 m³/h, and further preferably 1.5 m³/h to 8.0 m³/h per m² of bottom area of the aeration tank.

An aeration time in the aeration step may be, but not limited to, preferably 3 minutes to 30 days, more preferably 4 minutes to 20 days, and further preferably 5 minutes to 10 days. The aeration time within the above range reduces production cost and allows the gas to be sufficiently supplied to the white water and the adjusted water. The aeration may be performed continuously or several times.

### [Pitch control agent addition step]

In a pitch control agent addition step, the pitch control agent is added to efficiently suppress pitch coagulation and then prevent pitch trouble.

In the pitch control agent addition step, both the white water and the adjusted water are preferably exposed to gas considering that pitch coagulation in the entire white water circulation system can be efficiently suppressed to prevent pitch trouble.

In the pitch control agent addition step, the pitch control agent is preferably added to at least the adjusted water considering that the pitch control agent can be added to a small amount of water and efficiently mixed with the white water to exert an effect of the pitch control agent on the entire white water circulation system from a relationship between an amount of water in the white water circulation system and an amount of water in the adjusted water system.

Examples of the pitch control agent may include, but not limited to, surfactant, polymer, inorganic material, organic compound, oil content, starch, protein, enzyme, cyclodextrin, water-soluble cellulose, emulsifier, oxidant, and chelator.

Examples of the surfactant may include cationic surfactant, anionic surfactant, and non-ionic surfactant.

Examples of the polymer may include water-soluble polymer, cationic polymer, anionic polymer, ampholytic polymer, and non-ionic polymer. Examples of the polymer may include quaternary ammonium polymer, ester polymer, ether polymer, alcohol polymer, glycol polymer, ether ester polymer, methacrylic polymer, amide polymer, amine polymer, endocyclic nitrogen compound, polyvinyl alcohol, polyamide, polyetherester amide, polyethylenimine, polyamine/epihalohydrin, hydroxyalkyl cellulose, modified silicone, phenol resin, polyvinyl acetal resin, melamine resin, urethane resin, and poloxamer. Examples of the amide may include acrylamide. Examples of the amine may include alkylamine, alkylenediamine, and diallylamine.

Examples of the inorganic material may include alkali metal salt, aluminum compound, iron compound, calcium compound, talc, bentonite, zeolite, diatom earth, mica, white carbon, and inorganic acid.

Examples of the organic compound may include organic acid and alcohol. Examples of the organic acid may include phosphonic acid, gluconic acid, malic acid, citric acid, acetic acid, sulfonic acid, maleic acid, tartaric acid, lactic acid, and glycolic acid. Examples of the alcohol may include terpene alcohol. Examples of the endocyclic nitrogen compound may include pyrrolidone.

Examples of the oil content may include wax, mineral oil, vegetable oil, and animal oil.

The pitch control agent is commercially available from KURITA WATER INDUSTRIES LTD. under the product name "Spanplus".

The pitch control agent may be used alone, or two or more kinds of pitch control agents may be used in combination.

An amount of the pitch control agent to be added is, but not limited to, preferably 0.1 mg/L to 10,000 mg/L per kg of suspended solids (SS). The amount of the pitch control agent to be added within the above range allows the pitch control agent to exert a sufficient effect on pitch. Considering the above, the amount of the pitch control agent to be added is more preferably 5.0 mg/L to 5,000 mg/L, and further preferably 50 mg/L to 1,000 mg/L per kg of SS.

The pitch control agent may be added once or in several portions.

The pitch control agent addition step is preferably performed after the aeration step. Adding the pitch control agent after the aeration step allows the pitch control agent to exert a sufficient effect on pitch in a deposit on the bottom of the tank and coarsened pitch. Specifically, the above order of steps can efficiently suppress pitch coagulation in the white water circulation system, and can exert a sufficient effect on coarsened pitch, thereby preventing pitch trouble.

A time from the aeration processing to the addition of the pitch control agent is not limited as long as an effect of the aeration lasts, and is preferably 0 to 30 minutes, more preferably 0 to 25 minutes, and further preferably 0 to 20 minutes.

The pitch trouble prevention method according to the embodiment of the present invention can expose at least one of the white water and the adjusted water to gas, and can add the pitch control agent to at least one of the white water and the adjusted water, thereby efficiently suppressing pitch coagulation to prevent pitch trouble.

The pitch trouble prevention method according to the embodiment of the present invention can reduce or optimize usage of the pitch control agent as compared to a case without aeration. This may be because the gas increases fluidity in the tank to physically suppress bonding of the hydrophobic group of pitch-generating substances. Further, although the deposit on the bottom of the tank decomposes and organic acid produced by a microorganism and calcium bond to generate pitch of fatty acid calcium salt, circulation by the aeration can remove the deposit and prevent decomposition, thereby suppressing generation of pitch of fatty acid calcium salt.

### Examples

Next, the present invention will be described in more detail with examples, but the present invention is not limited by the examples.

A testing method of a test sample will be described below.

### <Redox potential (ORP)>

Redox potential (mV) was measured using a redox potential meter with potentiometry (manufactured by Toko Chemicals Inc.).

### <Pitch amount and pitch particle size>

A pitch amount (µm³) and a pitch particle size (µm) were measured by a method described in JP 6222173 B. Specifically, a fluorescent dye was added to a test sample, pulp slurry containing dyed pitch was observed through a fluorescence microscope under the conditions described below, and an image thereof was taken by a CCD camera. The obtained image was analyzed by image analysis software (manufactured by MITANI CORPORATION, product name "WinROOF") to measure a pitch amount and a pitch particle size.
Microscope: fluorescence mirror unit: manufactured by Olympus Corporation, product name "U-FBW"
Fluorescence source: halogen lamp: manufactured by Olympus Corporation, product name "U-HG LGPS"
CCD camera: manufactured by Olympus Corporation, product name "DP73-SET-A"
Eyepiece: 10X
Objective Lens: 10X
Shutter speed: 1 second
Field stop, aperture stop: both open
Intensity of halogen lamp: 3
Image size: 1200×1600 pixels

### [Example 1]

White water separated by a paper machine (wire part) in a certain paper mill was obtained and used as a test sample. An SS content in the test sample was 0.312%. A pitch amount in the test sample was 803 µm³, and a pitch particle size was 0.265 µm.

The test sample was subjected to aeration processing and pitch control agent addition processing described below.

### <Aeration processing>

Gas: air gas
Aeration tank: with a diffuser (diffuser pipe having an opening of 2 mm at an interval of 10 cm) at a bottom
Amount of aeration: 2 m³/h per m² of bottom area of the aeration tank

### <Pitch control agent addition processing>

Pitch control agent: product name "Spanplus 500" (manufactured by KURITA WATER INDUSTRIES LTD.)
Addition amount: 400 mg/L per kg of SS

### [Comparative example 1]

The test sample was subjected to only the above mentioned aeration processing.

### [Comparative example 2]

The test sample was subjected to only the above mentioned pitch control agent addition processing.

**[Table 1]**

| | ORP (mV) | Pitch amount (µm³) | Pitch particle size (µm) | Pitch trouble (%) |
|---|---|---|---|---|
| Example 1 | 153 | 148 | 1.53 | 70 |
| Comparative example 1 | 153 | 510 | 2.26 | 100 |
| Comparative example 2 | -400 | 448 | 1.55 | 80 |

In Comparative example 1 in which the aeration was performed using the oxygen-containing gas, an increase in ORP (suppression of decomposition) and a reduction in deposit on a bottom of a tank were confirmed as compared to Comparative example 2 in which the processing using only the pitch control agent was performed.

In Comparative example 2 in which the processing using only the pitch control agent was performed, reductions in pitch amount and pitch particle size were confirmed, but decomposition in the deposit on the bottom of the tank was not able to be suppressed as compared to Comparative example 1.

On the other hand, in Example 1 in which both the aeration using the gas and the addition of the pitch control agent were performed, an increase in ORP (suppression of decomposition), removal of the deposit, and reductions in pitch amount and pitch particle size in a system were confirmed. Thus, a reduction in pitch trouble to 70% was confirmed as compared to pitch trouble (defect due to pitch) of 100% in conventional cases.

### Industrial applicability

The pitch trouble prevention method of the present invention can effectively suppress and prevent pitch trouble such as a paper spot, a paper defect, a paper break, a reduction in workability in a papermaking step of paper production.

### Reference Signs List

- 1: raw material production process
- 2: machine tank
- 3: pump
- 4: screen
- 5: inlet
- 6: wire part
- 7: wet sheet
- 8: press part
- 9: dryer part
- 10: white water
- 11: white water silo
- 12: pitch control agent
- 13: aeration tank
- 14: pitch control agent
- 15: solid-liquid separator
- 16: solids are discharged or collected by raw material system
- 17: aeration tank
- 18: pitch control agent
- 19: adjusted water system
- 20: aeration tank
- 21: pitch control agent
- 22: white water circulation system
- 23: pump
- 24: pump
- 25: pump
- 26: pump
- 27: pump

## Claims

1. A pitch trouble prevention method in a papermaking step of paper production, comprising:
an aeration step of exposing at least one of white water and adjusted water to gas; and
a pitch control agent addition step of adding a pitch control agent to at least one of the white water and the adjusted water.

2. The pitch trouble prevention method according to claim 1, wherein the pitch control agent addition step is performed after the aeration step.

3. The pitch trouble prevention method according to claim 1 or 2, wherein in the pitch control agent addition step, an amount of the pitch control agent to be added is 0.1 mg/L to 10,000 mg/L per kg of suspended solids.

4. The pitch trouble prevention method according to any one of claims 1 to 3, wherein in the aeration step, an aeration tank having a diffuser at a bottom is used, and an amount of aeration by the diffuser is 0.5 m³/h to 10 m³/h per m² of bottom area of the aeration tank.

5. The pitch trouble prevention method according to any one of claims 1 to 4, wherein in the aeration step, both the white water and the adjusted water are exposed to gas.

6. The pitch trouble prevention method according to any one of claims 1 to 5, wherein a time from the aeration to the addition of the pitch control agent is 0 to 30 minutes.
